# EUROPEAN PATENT APPLICATION

(11) **EP 2 738 429 A1**
(43) Date of publication of application: **04.06.2014**
(21) Application number: 11870040.0
(22) Date of filing: 27.07.2011
(51) Int. Cl.: F16H 63/36

(54) **VEHICLE MANUAL TRANSMISSION**

(71) Applicant: Toyota Jidosha Kabushiki Kaisha, Toyota-shi, Aichi 471-8571 (JP)
(72) Inventor: WADA Tomoyasu, Toyota-shi Aichi 471-8571 (JP)
(74) Representative: Intès, Didier Gérard André
(86) International application number: PCT/JP2011/067154
(87) International publication number: WO 2013/014775

(57) **Abstract**

Providing a vehicle manual transmission capable of achieving a further increase in the number of stages without making a significant change in design of a conventional manual transmission.

Since a lock ball portion 110 is disposed with a shift head 94b adjacent to a turning position of an inner lever 96 corresponding to a reverse gear stage, the inner lever 96 is certainly moved to the turning position corresponding to the reverse gear stage when a reverse shift is made. Therefore, double meshing of a manual transmission 10 is prevented at the time of the reverse shift. Since the lock ball portion 110 is integrally disposed with the shift head 94b, an interlock mechanism can simply be configured.

## Description

### TECHNICAL FIELD

The present invention relates to a vehicle manual transmission and particularly to an interlock mechanism of a transmission.

### BACKGROUND ART

A vehicle manual transmission is well-known that includes a shift select shaft disposed movably in an axial direction and rotatably around a shaft center in a transmission case; an inner lever fixed to the shift select shaft, turned to a turning position corresponding to a select operation with a shift lever, and moved to an axial position corresponding to a shift operation with the shift lever; a plurality of shift heads pressed against the inner lever and moved in the axial direction when the inner lever is shift-operated at a turning position corresponding to a predetermined shift stage; a plurality of shift fork shafts respectively connected to the plurality of the shift heads and moved in an axial direction along with the shift heads; and a plurality of shift forks fixed to the shift fork shafts for switching to a predetermined shift stage.

For example, a manual transmission described in Patent Document 1 is an example thereof. The manual transmission of Patent Document 1 is configured such that shift stages of six forward speeds and one reverse speed can be achieved. The manual transmission of Patent Document 1 includes a first-speed/second-speed shift fork head 64a (shift head), a first-speed/second-speed fork shaft 64 (shift fork shaft) and a shift fork 64b fixed thereto, a third-speed/fourth-speed shift fork head 60a, a third-speed/fourth-speed fork shaft 60 and a shift fork 60b fixed thereto, a fifth-speed/sixth-speed shift fork head 62a, a fifth-speed/sixth-speed fork shaft 62 and a shift fork 62b fixed thereto, a reverse-stage shift fork head 70a, and a reverse-stage fork shaft 70. A known interlock plate 14 is disposed as an interlock mechanism for preventing double meshing of the manual transmission generated when an inner lever 12 presses two shift heads at the same time. As described above, the manual transmission of Patent Document 1 is disposed with the four shift fork shafts for achieving the shift stages of six forward speeds and one reverse speed and is further disposed with the interlock plate 14 having relatively large component dimensions.

### PRIOR ART DOCUMENT

### Patent Document

Patent Document 1: Japanese Laid-Open Patent Publication No. 2007-327513

### SUMMARY OF THE INVENTION

### Problem to Be Solved by the Invention

For example, when a six-forward-speed manual transmission is designed, it is contemplated that six forward speeds are acquired by making a change based on a conventional five-forward-speed manual transmission. The conventional five-forward-speed manual transmission includes three shift fork shafts and has a relatively simple structure. In a structure contemplated for acquiring six forward speeds by making a change while maintaining this simple structure, three shift fork shafts are maintained and a reverse idler gear meshed at the time of a reverse shift is meshed by using a different lever without using a shift fork and a shift fork shaft. Although an interlock mechanism for preventing the double meshing of the manual transmission must be disposed in such a manual transmission, a known interlock pin is employed as the interlock mechanism in the conventional five-forward-speed manual transmission. If the interlock pin is employed, a shift fork shaft for the reverse shift must be added, which complicates the structure of the manual transmission. If the interlock plate of Patent Document 1 is employed, a component thereof has a large and complicated shape, causing a problem of an increase in manufacturing cost.

The present invention was conceived in view of the situations and it is therefore an object of the present invention to provide a vehicle manual transmission capable of achieving a further increase in the number of stages without making a significant change in design of a conventional manual transmission.

### Means for Solving the Problem

To achieve the object, the first aspect of the invention provides (a) a vehicle manual transmission comprising: a shift select shaft disposed movably in an axial direction and rotatably around a shaft center in a transmission case; an inner lever fixed to the shift select shaft, turned to a turning position corresponding to a select operation with a shift lever, and moved to an axial position corresponding to a shift operation with the shift lever; a plurality of shift heads for forward running pressed against the inner lever and moved in the axial direction when the inner lever is shift-operated at a turning position corresponding to a predetermined shift stage; a plurality of shift fork shafts respectively connected to the plurality of the shift heads and moved in axial directions along with the shift heads; and a plurality of shift forks respectively fixed to the plurality of the shift fork shafts for switching to predetermined shift stages, (b) the vehicle manual transmission having a detent mechanism disposed with the shift head adjacent to a turning position of the inner lever corresponding to a reverse gear stage.

### Effects of the Invention

Consequently, since the detent mechanism is disposed with the shift head adjacent to the turning position of the inner lever corresponding to the reverse gear stage, the inner lever is certainly moved to the turning position corresponding to the reverse gear stage when the reverse shift is made. Therefore, the double meshing of the manual transmission is prevented at the time of the reverse shift. Since the detent mechanism is disposed in the shift head, the interlock mechanism can simply be configured.

Preferably, the plurality of the shift fork shafts are disposed with interlock pins respectively, allowing axial movement of selected one of the shift fork shafts and blocking axial movement of the other shift fork shafts. Consequently, when a shift operation is performed to a shift stage corresponding to forward running, the conventionally disposed interlock pins can be allowed to act as an interlock mechanism to prevent the double meshing of the manual transmission during forward running without making a significant change in design.

Preferably, the detent mechanism is a mechanism using a spring to press a ball against the inner lever. Consequently, the detent mechanism can be configured with a very simple configuration.

### BRIEF DESCRIPTION OF THE DRAWINGS

Fig. 1 is a cross-sectional view of a vehicle manual transmission to which the present invention is applied.
Fig. 2 is a cross-sectional view of a vehicle manual transmission with a conventional structure.
Fig. 3 depicts a shift mechanism for making a shift to a shift stage corresponding to a shift operation of a driver in the manual transmission of Fig. 1.
Fig. 4 is a diagram for explaining an operation position of the shift lever.
Fig. 5 is an arrangement diagram for explaining arrangement positions of an output shaft, a countershaft, and an idler gear for the reverse gear stage of the manual transmission of Fig. 1 and arrangement positions of the shift fork shafts, the shift heads, etc.
Fig. 6 is a simplified diagram of a configuration of the inner lever and the shift heads of Fig. 5.
Fig. 7 is a diagram of a state in which the inner lever presses the shift head and moves in the axial direction along with the shift head in Fig. 6.
Fig. 8 is a diagram of a position of the inner lever when the reverse gear stage is selected in Fig. 6.
Fig. 9 is an arrow view when Fig. 8 is viewed from a direction of an arrow A.
Fig. 10 is a perspective view of the shift head of Fig. 9 and a ball holding portion of a lock ball portion integrally disposed in the shift head.

### MODE FOR CARRYING OUT THE INVENTION

An example of the present invention will now be described in detail with reference to the drawings. In the following example, diagrams are simplified or modified as needed and dimensional ratios and shapes of portions are not necessarily exactly depicted.

### Example

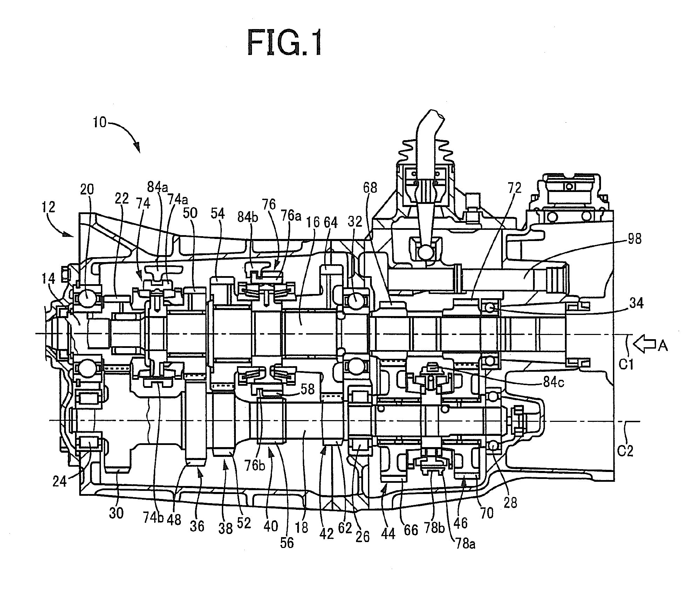

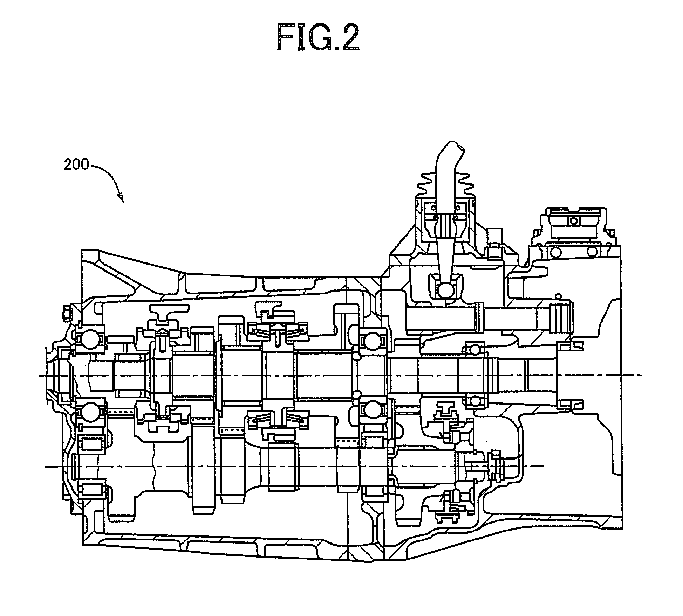

Fig. 1 is a cross-sectional view of a vehicle manual transmission 10 (hereinafter, a manual transmission 10) to which the present invention is applied. The manual transmission 10 is a parallel two-shaft six-speed manual transmission capable of shifting to six forward speeds and one reverse speed. The manual transmission 10 is acquired by changing a portion of a five-speed manual transmission 200 depicted in Fig. 2 to a six-speed manual transmission.

As depicted in Fig. 1, the manual transmission 10 includes in a transmission case 12 (hereinafter, a case 12) an input shaft 14 and an output shaft 16 rotatably supported on a first shaft center C1, and a countershaft 18 rotatably supported on a second shaft center C2. The input shaft 14 and the output shaft 16 are rotatably supported relatively to each other. The transmission case 12 corresponds to a transmission case of the present invention.

The input shaft 14 is coupled via a clutch etc., not depicted to an engine not depicted and is rotatably supported via a bearing 20 by the case 12. An input gear 22 is formed on the input shaft 14 and is constantly meshed with a counter gear 30 described later of the countershaft 18. Therefore, when the input shaft 14 rotates, the countershaft 18 is also rotated.

The countershaft 18 is rotatably supported by the case 12 via a bearing 24, a bearing 26, and a bearing 28 and is formed with the counter gear 30 constantly meshed with the input gear 22. The output shaft 16 is rotatably supported by the case 12 via a bearing 32 and a bearing 34.

A third-speed gear pair 36, a second-speed gear pair 38, a reverse gear pair 40, a first-speed gear pair 42, a sixth-speed gear pair 44, and a fifth-speed gear pair 46 consisting of pairs of meshing gears are disposed between the countershaft 18 and the output shaft 16 in order from the input shaft 14 side.

The third-speed gear pair 36 is made up of a third-speed counter gear 48 integrally rotating with the countershaft 18, and a third-speed gear 50 constantly meshed with the third-speed counter gear 48 and relatively rotatably supported on the output shaft 16.

The second-speed gear pair 38 is made up of a second-speed counter gear 52 integrally rotating with the countershaft 18, and a second-speed gear 54 constantly meshed with the second-speed counter gear 52 and relatively rotatably supported on the output shaft 16.

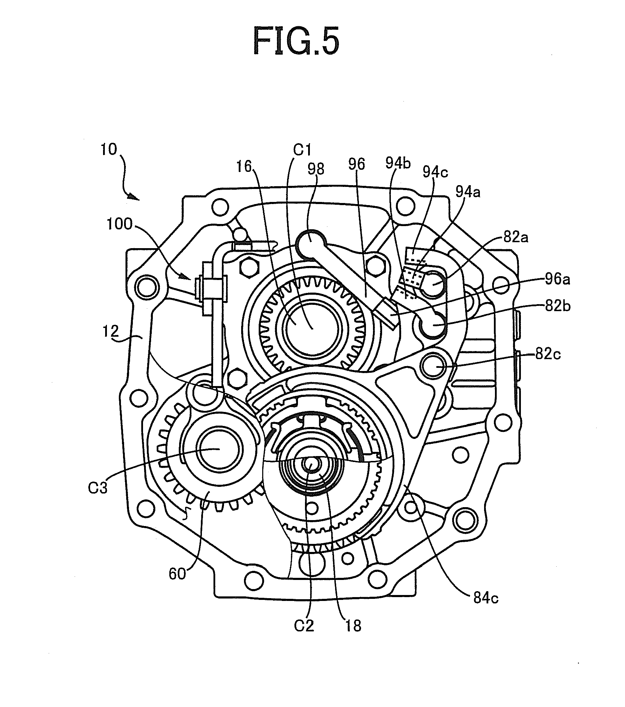

The reverse gear pair 40 is made up of a reverse counter gear 56 integrally rotating with the coumtershaft 18, a reverse gear 58 integrally rotating with the output shaft 16, and an idler gear 60 (see Fig. 5) selectively meshed with these gears when a reverse gear stage is selected.

The first-speed gear pair 42 is made up of a first-speed counter gear 62 integrally rotating with the countershaft 18, and a first-speed gear 64 constantly meshed with the first-speed counter gear 62 and relatively rotatably supported on the output shaft 16.

The sixth-speed gear pair 44 is made up of a sixth-speed counter gear 66 relatively rotatably supported on the countershaft 18 and a sixth-speed gear 68 constantly meshed with the sixth-speed counter gear 66 and fixed to the output shaft 16.

The fifth-speed gear pair 46 is made up of a fifth-speed counter gear 70 relatively rotatably supported on the countershaft 18 and a fifth-speed gear 72 constantly meshed with the fifth-speed counter gear 70 and fixed to the output shaft 16.

A known first synchronization mechanism 74 is disposed between the input gear 22 and the third-speed gear 50. The first synchronization device 74 is disposed for using a friction force to synchronize rotating members rotating at the numbers of rotations different from each other so as to make a smooth shift when a third-speed gear stage or a fourth-speed gear stage is established. For example, if the third-speed gear stage is selected, a friction force is generated when a hub sleeve 74a of the first synchronization mechanism 74 is moved toward the third-speed gear 50; the rotations of the third-speed gear 50 and the output shaft 16 are synchronized; and the third-speed gear 50 and the output shaft 16 are relatively non-rotatably connected. In this case, a shift to the third-speed gear stage (3rd) is made. If the fourth-speed gear stage is selected, a friction force is generated when the hub sleeve 74a of the first synchronization mechanism 74 is moved toward the input shaft 14; the rotations of the input shaft 14 and the output shaft 16 are synchronized; and the input shaft 14 and the output shaft 16 are relatively non-rotatably connected. In this case, a shift to the fourth-speed gear stage (4th) is made. At the fourth-speed gear stage, since the input shaft 14 and the output shaft 16 are directly coupled, a gear ratio y is 1.0. Detailed structure and action of the first synchronization mechanism 74 are known and will not be described.

A known second synchronization mechanism 76 is disposed between the second-speed gear 54 and the first-speed gear 64. The second synchronization mechanism 76 is disposed for using a friction force to synchronize rotating members rotating at the numbers of rotations different from each other so as to make a smooth shift when a second-speed gear stage or a first-speed gear stage is established. For example, if the second-speed gear stage is selected, a friction force is generated when a hub sleeve 76a of the second synchronization mechanism 76 is moved toward the second-speed gear 54; the rotations of the second-speed gear 54 and the output shaft 16 are synchronized; and the second-speed gear 54 and the output shaft 16 are relatively non-rotatably connected. In this case, a shift to the second-speed gear stage (2nd) is made. If the first-speed gear stage is selected, a friction force is generated when the hub sleeve 76a is moved toward the first-speed gear 64; the rotations of the first-speed gear 64 and the output shaft 16 are synchronized; and the first-speed gear 64 and the output shaft 16 are relatively non-rotatably connected. In this case, a shift to the first-speed gear stage (1st) is made. Detailed structure and action of the second synchronization mechanism 76 are known and will not be described.

A known third synchronization mechanism 78 is disposed between the sixth-speed counter gear 66 and the fifth-speed counter gear 70. The third synchronization mechanism 78 is disposed for using a friction force to synchronize rotating members rotating at the numbers of rotations different from each other so as to make a smooth shift when a sixth-speed gear stage or a fifth-speed gear stage is established. For example, if the sixth-speed gear stage is selected, a friction force is generated when a hub sleeve 78a of the third synchronization mechanism 78 is moved toward the sixth-speed counter gear 66; the rotations of the sixth-speed counter gear 66 and the countershaft 18 are synchronized; and the sixth-speed counter gear 66 and the countershaft 18 are relatively non-rotatably connected. In this case, a shift to the sixth-speed gear stage (6th) is made. If the fifth-speed gear stage is selected, a friction force is generated when the hub sleeve 78a is moved toward the fifth-speed counter gear 70; the rotations of the fifth-speed counter gear 70 and the countershaft 18 are synchronized; and the fifth-speed counter gear 70 and the countershaft 18 are relatively non-rotatably connected. In this case, a shift to the fifth-speed gear stage (5th) is made. Detailed structure and action of the third synchronization mechanism 78 are known and will not be described.

Comparing the manual transmission 10 with the five-speed manual transmission 200 of Fig. 2, only the fifth-speed gear pair 46 is added and no significant change in design is made in the other structures. In the manual transmission 200 of Fig. 2, the sixth-speed gear pair 44 of Fig. 1 corresponds to a fifth-speed gear pair establishing a fifth-speed gear stage.

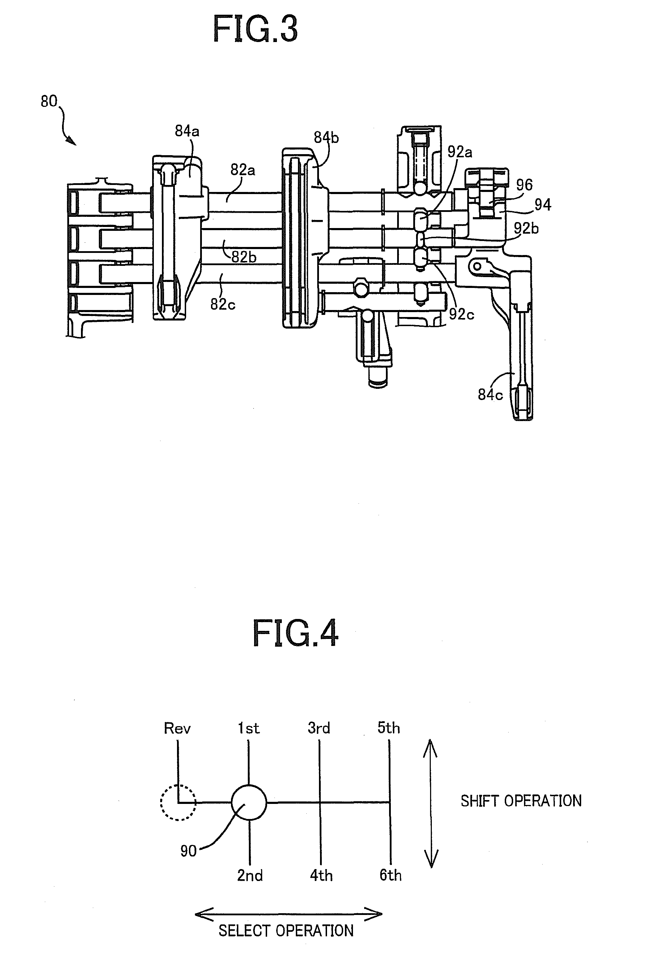

Fig. 3 depicts a shift mechanism 80 for making a shift to a shift stage corresponding to a shift operation of a driver in the manual transmission 10 of Fig. 1. The shift mechanism 80 includes three shift fork shafts 82a, 82b, and 82c (referred to as shift fork shafts 82 if not particularly distinguished) and respective shift forks 84a, 84b, and 84c (referred to as shift forks 84 if not particularly distinguished) are fixed to the shift fork shafts 82. All the shift fork shafts 82 are supported movably in the axial direction and when the shift fork shafts 82 are moved in the axial direction, the shift forks 84 are moved in the axial direction in an interlocked manner. The three shift fork shafts 82a to 82c correspond to a plurality of shift fork shafts of the present invention and the three shift forks 84a to 84c correspond to a plurality of shift forks of the present invention.

The shift forks (84a, 84b, 84c) are respectively fitted into annular grooves (74b, 76b, 78b) formed in the hub sleeves (74a, 76a, 78a) of the first synchronization mechanism 74 to the third synchronization mechanism 78 of Fig. 1 and, when the shift forks 84 move in the axial direction, the hub sleeves (74a, 76a, 78a) move in the axial direction in an interlocked manner to actuate the synchronization mechanisms (74, 76, 78). In this example, it is assumed that the shift fork 84a fits into the annular groove 74b formed in the hub sleeve 74a of the first synchronization mechanism 74, that the shift fork 84b fits into the annular groove 76b formed in the hub sleeve 76a of the second synchronization mechanism 76, and that the shift fork 84c fits into the annular groove 78b formed in the hub sleeve 78a of the third synchronization mechanism 78.

Any of the shift fork shafts 82 is selected by a select operation with a shift lever 90 (see Fig. 4) by a driver and the selected shift fork shaft 82 and the shift fork 84 are moved in the axial direction by a shift operation with the shift lever 90 by the driver. The select operation and the shift operation of the driver correspond to an operation direction of the shift lever 90 of Fig. 4. In this example, for example, when the shift lever 90 is select-operated to a select position corresponding to the first-speed gear stage (1st) and the second-speed gear stage (2nd) depicted in Fig. 4, the shift fork shaft 82b is movable in the axial direction in this configuration. When a shift operation is performed in this state, the shift fork shaft 82b and the shift fork 84b fixed thereto are moved in the axial direction and the second synchronization mechanism 76 is actuated, thereby making a shift to the first-speed gear stage or the second-speed gear stage. When the shift operation to the first-speed gear stage is performed, the shift fork shaft 82b and the shift fork 84b are moved to the right in Fig. 3. In this case, since the hub sleeve 76a depicted in Fig. 1 fitted to the shift fork 84b is moved in the axial direction toward the first gear 64, the first gear 64 and the output shaft 16 are synchronized and a shift is made to the first-speed gear stage.

For example, when the shift lever 90 is select-operated to a select position corresponding to the third-speed gear stage (3rd) and the fourth-speed gear stage (4th), the shift fork shaft 82a is movable in the axial direction in this configuration. When a shift operation is performed in this state, the shift fork 84a is moved in the axial direction and the first synchronization mechanism 74 is actuated, thereby making a shift to the third-speed gear stage or the fourth-speed gear stage.

For example, when the shift lever 90 is select-operated to a select position corresponding to the fifth-speed gear stage (5th) and the sixth-speed gear stage (6th), the shift fork shaft 82c is movable in the axial direction in this configuration. When a shift operation is performed in this state, the shift fork 84c is moved in the axial direction and the third synchronization mechanism 78 is actuated, thereby making a shift to the fifth-speed gear stage or the sixth-speed gear stage.

For example, when the shift lever 90 is select-operated to a select position corresponding to the reverse gear stage (Rev) indicated by a broken line, the idler gear 60 (see Fig. 5) for backward running can be mashed with the reverse counter gear 56 and the reverse gear 58. When a shift operation is performed in this state, the idler gear 60 is meshed via a lever mechanism 100 (see Fig. 5) described later with the reverse counter gear 56 and the reverse gear 58 and the reverse gear stage is achieved. As described above, the shift fork shafts and the shift forks are not used for the reverse gear stage in this configuration.

In the shift mechanism 80, the respective shift fork shafts 82 are disposed with known interlock pins (92a to 92c) as an interlock mechanism for preventing the shift fork shafts 82 from moving at the same time in the axial direction. The shift fork shaft 82a is formed with a groove engageable with the interlock pin 92a; the shift fork shaft 82b is formed with a groove engageable with the interlock pin 92a and the interlock pin 92c; and the shift fork shaft 82c is formed with a groove engageable with the interlock pin 92c. The shift fork shaft 82b positioned between the shift fork shafts 82a and 82c is formed with a through-hole and the interlock pin 92b is inserted movably through this through-hole. The interlock pins 92 are arranged adjacently to each other and the interlock pins 92 are movable in a direction perpendicular to the shift fork shafts 82.

When the interlock pins (92a to 92c) are disposed in this way, for example, if the shift fork shaft 82a is moved in the axial direction, since the interlock pin 92a is pushed out by the shift fork shaft 82a and fitted into the groove formed in the shift fork shaft 82b, the axial movement of the shift fork shaft 82b is blocked. Since the interlock pin 92b is pushed out by the interlock pin 92a fitted into the shift fork shaft 82b and the interlock pin 92b presses the interlock pin 92c toward the shift fork shaft 82c, the interlock pin 92c fits into the groove of the shift fork shaft 82c, and the axial movement of the shift fork shaft 82c is blocked.

When the shift fork shaft 82b moves in the axial direction, since the interlock pin 92a and the interlock pin 92c are pushed out by the shift fork shaft 82b and the interlock pin 92a is fitted into the groove of the shift fork shaft 82a while the interlock pin 92c is fitted into the groove of the shift fork shaft 82c, the axial movement of the shift fork shaft 82a and the shift fork shaft 82c is blocked.

When the shift fork shaft 82c moves in the axial direction, since the interlock pin 92c is pushed out by the shift fork shaft 82c and fitted into the groove of the shift fork shaft 82b, the axial movement of the shift fork shaft 82b is blocked. Since the interlock pin 92b is pushed out by the interlock pin 92c fitted into the shift fork shaft 82b and the interlock pin 92b presses the interlock pin 92a toward the shift fork shaft 82a, the interlock pin 92a fits into the groove of the shift fork shaft 82a, and the axial movement of the shift fork shaft 82a is blocked. In this way, since the axial movement of the selected shift fork shaft 82 is permitted while the axial movement of the other shift fork shafts 82 is blocked, the shift fork shafts 82 are prevented from moving at the same time in the axial direction, thereby preventing the locking due to double meshing of the manual transmission 10.

A mechanism selectively moving the shift fork shafts 82 and the shift forks 84 in the axial direction will be described. The respective shift fork shafts 82 are connected to shift heads (94a to 94c) each having a leading end portion formed into a forked shape, and an inner lever 96 is disposed that is engageable with a groove formed in the leading end portion of each of the shift heads 94 (referred to as a shift head 94 if not particularly distinguished). Although not depicted in Fig. 1, the inner lever 96 is fixed to a shift select shaft 98 supported rotatably and movably in the axial direction depicted in Fig. 1 and is turned around the shaft center of the shift select shaft 98 along with the shift select shaft 98 and moved in the axial direction.

Fig. 5 is an arrangement diagram for explaining arrangement positions of the output shaft 16, the countershaft 18, and the idler gear 60 for the reverse gear stage of the manual transmission 10 of Fig. 1 and arrangement positions of the shift fork shafts 82, the shift heads 94, etc., and corresponds to a view from an arrow A depicted in Fig. 1.

As depicted in Fig. 5, the output shaft 16 rotatable around the first shaft center C1 and the countershaft 18 rotatable around the second shaft center C2 are arranged, and the idler gear 60 for meshing with the reverse counter gear 56 and the reverse gear 58 is disposed on a third shaft center C3. When a shift operation to the reverse gear stage is performed, the lever mechanism 100 is actuated and the idler gear 60 is moved in the axial direction. As a result, the idler gear 60 is meshed with the reverse counter gear 56 and the reverse gear 58, and the reverse gear stage is established. A mechanism actuating the lever mechanism 100 with the inner lever 96 is omitted.

As depicted in Fig. 5, the shift select shaft 98 is disposed rotatably and movably in the axial direction, and the inner lever 96 is fixed to the shift select shaft 98. If the shift select shaft 98 rotates, the inner lever 96 is turned around the shaft center of the shift select shaft 98. The leading end portions of the shift heads (94a to 94c) fixed to the shift fork shafts 82 and formed into the forked shapes are disposed at a position engageable with a leading end portion 96a of the inner lever 96. Respective cutouts for performing a smooth shift are formed in the leading end portion 96a of the inner lever 96 and the leading end portions of the shift heads 94 coming into contact when the inner lever 96 is moved in the axial direction.

When the shift heads 94 and the inner lever 96 are arranged in this way, the inner lever 96 is turned to a position engaged with the shift head 94 corresponding to a predetermined shift stage, i.e., a turning position fitting into the groove formed in the leading end portion of the shift head 94, in accordance with the select operation of the driver and, when the inner lever 96 is moved in the axial direction by the shift operation of the driver in this state, the inner lever 96 presses the shift head 94 in the axial direction and, therefore, the shift fork shaft 82 and the shift fork 84 are moved in the axial direction along with the inner lever 96.

On the other hand, if the select operation to the reverse gear stage is performed, the inner lever 96 is turned to a position engaged with none of the shift heads 94 as depicted in Fig. 5, for example. This turning position is a position at which the idler gear 60 can be moved in the axial direction via a mechanism not depicted actuating the lever mechanism 100 with the inner lever 96, and the lever mechanism 100.

When the forward gear stages (1st to 6th) are selected, the shift fork shafts (82a to 82c) are prevented from moving at the same time in the axial direction by the interlock pins (92a to 92c); however, if the shift operation is performed while the inner lever 96 does not yet reach a turning position corresponding to the reverse gear stage at the time of a reverse shift, the shift head 94b adjacent to the turning position of the reverse gear stage may be pushed by the inner lever 96 at the same time and the double meshing of the manual transmission 10 may occur.

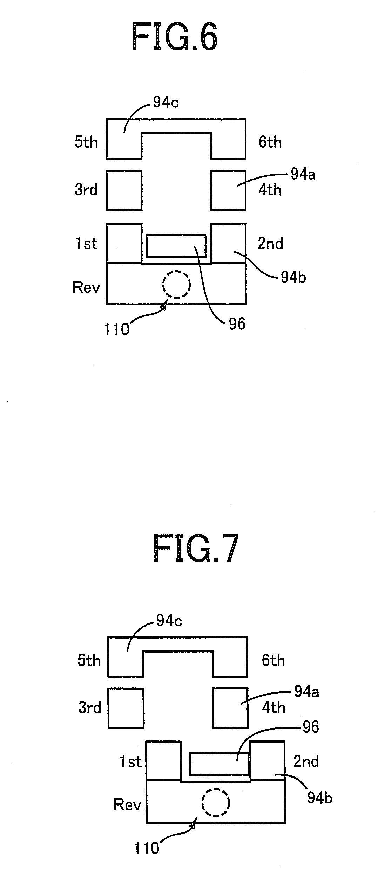

In this regard, a lock ball portion 110 described later is disposed with the shift head 94b adjacent to the turning position of the reverse gear stage to prevent the double meshing. Fig. 6 is a simplified diagram of a configuration of the inner lever 96 and the shift heads 94. As depicted in Fig. 6, the inner lever 96 is located at a position engageable with a groove formed by forming the leading end portions of the shift heads 94 into a forked shape. In Fig. 6, as the shift select shaft 98 rotates, the inner lever 96 moves in the vertical direction. Fig. 6 depicts a state in which the inner lever 96 is engaged with the shift head 94b. If the inner lever 96 moves to, for example, the right in Fig. 6 in this state, one side of the shift head 94b is pressed by the inner lever 96 and the shift head 94b moves to the right side as shown in Fig. 7. In this case, a shift is made to the second-speed gear stage (2nd).

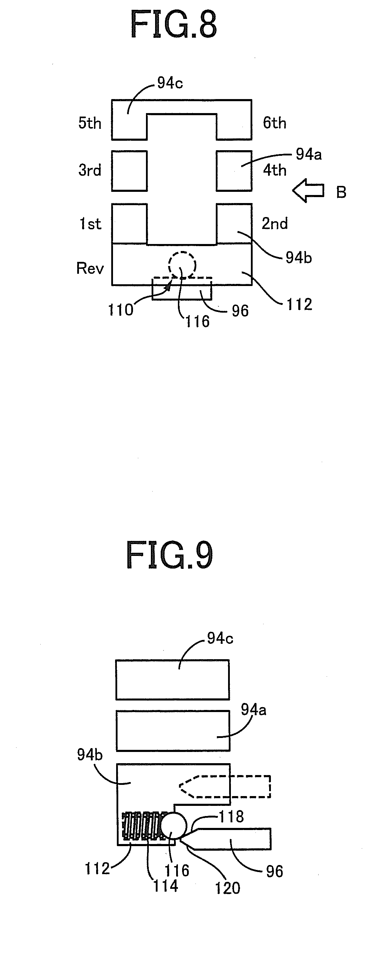

If the reverse gear stage is selected, the inner lever 96 is moved to the turning position corresponding to the reverse gear stage indicated by a solid line of Fig. 8. The shift head 94b adjacent to this turning position is integrally disposed with the lock ball portion 110. The lock ball portion 110 has a ball holding portion 112 integrally disposed on the shift head 94b, a spring 114 (see Fig. 9) inverted in a cylindrical hole formed in the ball holding portion 112, and a ball 116 disposed at a tip of the spring 114 for pressing against the inner lever 96. The lock ball portion 110 corresponds to a detent mechanism of the present invention.

Fig. 9 is an arrow view when Fig. 8 is viewed from an arrow B. The inner lever 96 indicated by a broken line represents a state of engagement with the shift head 94b. As can be seen from Fig. 9, the lock ball portion 110 has a structure having the spring 114 inserted in the cylindrical hole formed in the ball holding portion 112 and the spring 114 biases the ball 116 toward the inner lever 96.

If the lock ball portion 110 is disposed in this way, when the inner lever 96 moves from a position indicated by the broken line to the turning position corresponding to the reverse gear stage indicated by a solid line, a tip of the ball 116 comes into contact with a first inclined surface 118 of the inner lever 96. When the inner lever 96 further moves toward the reverse gear stage, the ball 116 is moved by the inner lever 96 and the spring 114 is compressed. When the contacting surface with the ball 116 goes over the first inclined surface 118 and moves to the side of a second inclined surface 120, an elastic returning force of the compressed spring 114 causes the ball 116 to press the second inclined surface 120 and, therefore, the inner lever 96 is moved to the turning position of the reverse gear stage indicated by the solid line as if the inner lever 96 is drawn in. Therefore, the inner lever 96 cannot stay at the turning position pushing the shift head 94b and a lever for shifting to the reverse gear stage at the same time.

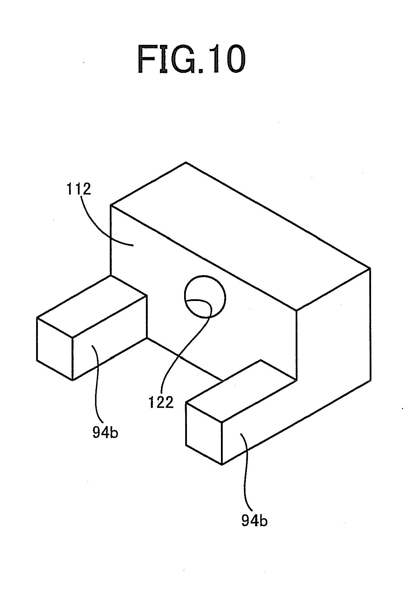

Fig. 10 is a perspective view of the shift head 94b and the ball holding portion 112 of the lock ball portion 110 integrally disposed with the shift head 94b. As depicted in Fig. 10, the ball holding portion 112 is formed with a bottomed cylindrical hole 122 for housing the spring 114 and the spring 114 is housed in the cylindrical hole 122. As described above, the lock ball portion 110 is integrally disposed in the shift head 94b and is simply configured.

As described above, according to this example, since the lock ball portion 110 is disposed with the shift head 94b adjacent to the turning position of the inner lever 96 corresponding to the reverse gear stage, the inner lever 96 is certainly moved to the turning position corresponding to the reverse gear stage when the reverse shift is made. Therefore, the double meshing of the manual transmission 10 is prevented at the time of the reverse shift. Since the lock ball portion 110 is integrally disposed with the shift head 94b, the interlock mechanism can simply be configured.

According to this example, the shift fork shafts 82 are disposed with the interlock pins (92a to 92c) allowing the axial movement of the respective selected shift fork shafts 82 and blocking the axial movement of the other shift fork shafts. As a result, when a shift operation is performed to a shift stage corresponding to forward running, the conventionally disposed interlock pins (92a to 92c) can be allowed to act as an interlock mechanism to prevent the double meshing of the manual transmission 10 during forward running without making a significant change in design.

According to this example, the lock ball portion 110 is a mechanism using the spring 114 to press the ball 116 against the inner lever 96. As a result, the lock ball portion 110 can be configured with a very simple configuration.

Although the example of the present invention has been described in detail with reference to the drawings, the present invention is applied in other forms.

For example, although the lock ball portion 110 is disposed on the side of the shift head 94b in this example, the lock ball portion 110 may be disposed on the side of the shift head 94c corresponding to the fifth-speed gear stage and the sixth-speed gear stage.

Although the manual transmission 10 is a six-forward-speed transmission in the example, the present invention is applicable to a transmission having shift stages of five forward speeds or more. The numbers of shift fork shafts etc., are also changed in accordance with the number of shift stages. Therefore, although the three shift fork shafts 82a to 82c are used in this example, this is changed as needed.

The above description is merely an embodiment and the present invention may be implemented in variously modified and improved forms based on the knowledge of those skilled in the art.

### NOMENCLATURE OF ELEMENTS

- 10:: vehicle manual transmission
- 12:: transmission case (transmission case)
- 82a-82c:: shift fork shafts
- 84a-84c:: shift forks
- 90:: shift lever
- 92a-92c:: interlock pins
- 94a-94c:: shift heads
- 96:: inner lever
- 98:: shift select shaft
- 110:: lock ball portion (detent mechanism)
- 114:: spring
- 116:: ball

## Claims

1. A vehicle manual transmission comprising: a shift select shaft disposed movably in an axial direction and rotatably around a shaft center in a transmission case; an inner lever fixed to the shift select shaft, turned to a turning position corresponding to a select operation with a shift lever, and moved to an axial position corresponding to a shift operation with the shift lever; a plurality of shift heads for forward running pressed against the inner lever and moved in the axial direction when the inner lever is shift-operated at a turning position corresponding to a predetermined shift stage; a plurality of shift fork shafts respectively connected to the plurality of the shift heads and moved in axial directions along with the shift heads; and a plurality of shift forks respectively fixed to the plurality of the shift fork shafts for switching to predetermined shift stages,
the vehicle manual transmission having a detent mechanism disposed with the shift head adjacent to a turning position of the inner lever corresponding to a reverse gear stage.

2. The vehicle manual transmission of claim 1, wherein the plurality of the shift fork shafts are disposed with interlock pins respectively, allowing axial movement of selected one of the shift fork shafts and blocking axial movement of the other shift fork shafts.

3. The vehicle manual transmission of claim 1 or 2, wherein the detent mechanism is a mechanism using a spring to press a ball against the inner lever.
